(19)

Europäisches
Patentamt
European
Patent Office
Office européen
des brevets

(11) **EP 4 510 400 A1**

(12) **EUROPEAN PATENT APPLICATION**
published in accordance with Art. 153(4) EPC

(43) Date of publication:
**19.02.2025 Bulletin 2025/08**

(21) Application number: **22943107.7**

(22) Date of filing: **25.05.2022**

(51) International Patent Classification (IPC):
**H01S 5/40** (2006.01)       **G02B 27/09** (2006.01)

(52) Cooperative Patent Classification (CPC):
**G02B 27/09; H01S 5/40**

(86) International application number:
**PCT/CN2022/094966**

(87) International publication number:
**WO 2023/225902 (30.11.2023 Gazette 2023/48)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Shenzhen Yinwang Intelligent
Technologies Co., Ltd.
Shenzhen, Guangdong 518129 (CN)**

(72) Inventors:
• **AN, Kai
  Shenzhen, Guangdong 518129 (CN)**

• **CHEN, Yufeng
  Shenzhen, Guangdong 518129 (CN)**
• **QIU, Sunjie
  Shenzhen, Guangdong 518129 (CN)**
• **HAN, Wei
  Shenzhen, Guangdong 518129 (CN)**
• **GUO, Jiaxing
  Shenzhen, Guangdong 518129 (CN)**

(74) Representative: **Gill Jennings & Every LLP
The Broadgate Tower
20 Primrose Street
London EC2A 2ES (GB)**

(54) **TRANSMITTING MODULE, DETECTION APPARATUS AND TERMINAL DEVICE**

(57)     A transmitting module, a detection apparatus, and a terminal device are provided. The transmitting module includes an array light source and an optical shaping assembly. The optical shaping assembly includes a spheric lens and/or an aspheric lens. The array light source is configured to emit a first light beam. The optical shaping assembly is configured to: adjust, in at least a first direction, a first divergence angle of the first light beam emitted by the array light source to a first preset divergence angle, and uniformize the first light beam to obtain a second light beam. This has a good divergence angle adjustment and uniformization effect on the first light beam emitted by the array light source, resolves a problem in the conventional technology that a micro-nano optical element produced by using a complex production process is needed for shaping, and may be applied to fields such as autonomous driving, intelligent driving, assisted driving, networked vehicles, or surveying and mapping.

FIG. 3

EP 4 510 400 A1

**Description**

**TECHNICAL FIELD**

This application relates to the field of optical shaping technologies, and in particular, to a transmitting module, a detection apparatus, and a terminal device.

**BACKGROUND**

With development of science and technology, smart terminals such as smart transportation devices, smart home devices, robots, and vehicles are gradually introduced into people's daily life. A lidar can sense an ambient environment and further identify and track a moving target or identify a static target, for example, a lane line or a sign plate, based on sensed environment information, and can perform path planning in combination with a navigator, map data, and the like. Therefore, the lidar plays an increasingly important role in a smart terminal.

Based on different application requirements of the lidar, there are different requirements for shaping a light beam emitted by a light source in the lidar, so that the lidar can form an emergent light beam with specific energy density distribution. This process may also be referred to as a light beam shaping process. Currently, the light beam is usually shaped by using a micro-nano optical element (for example, a microlens array (microlens array, MLA) or a diffractive optical element (diffractive optical element, DOE)). However, these micro-nano optical elements have high processing precision, complex processes, and complex optical path design.

In conclusion, how to shape the light beam by using a shaping structure with a simple production process is a technical problem that needs to be urgently resolved.

**SUMMARY**

This application provides a transmitting module, a detection apparatus, and a terminal device, to implement light beam shaping by using an optical shaping assembly with a simple production process.

According to a first aspect, this application provides a transmitting module. The transmitting module includes an array light source and an optical shaping assembly. The optical shaping assembly includes a spheric lens and/or an aspheric lens. The array light source is configured to emit a first light beam. A divergence angle of the first light beam is a first divergence angle. The optical shaping assembly is configured to: adjust, in at least a first direction, the first divergence angle of the first light beam from the array light source to a first preset divergence angle, and uniformize the first light beam to obtain a second light beam. A divergence angle of the second light beam is the first preset divergence angle.

Based on the foregoing solution, the first light beam emitted by the array light source can be shaped (including divergence angle adjustment and uniformization) in the first direction by using the optical shaping assembly, to obtain the second light beam at the first preset divergence angle. In addition, energy density of a light spot formed by the second light beam is uniform. Further, a production process of a conventional spheric lens and/or aspheric lens included in the optical shaping assembly is simple. In other words, based on the foregoing transmitting module, a good shaping effect on the first light beam emitted by the array light source can be achieved by using the spheric lens and/or aspheric lens that are/is produced by using the simple process.

In a possible implementation, the array light source includes m×n light sources, where m is an integer greater than 1, and n is a positive integer.

In a possible implementation, the optical shaping assembly includes a first collimator. The first collimator is configured to: adjust, in the first direction, the first divergence angle of the first light beam from the array light source to the first preset divergence angle, and uniformize the first light beam.

The divergence angle and uniformity of the first light beam emitted by the array light source may be adjusted in the first direction by using the first collimator. This may also be understood as follows: The first collimator may be used to perform, in the first direction, a divergence angle scaling on the first light beam emitted by the array light source, to obtain the second light beam, and the second light beam is freely propagated for aliasing and uniformization.

In a possible implementation, the array light source is located at a first preset distance from an object focus of the first collimator, and the first preset distance is related to a duty cycle (or referred to as a filling rate) of the array light source in the first direction and the first divergence angle of the first light beam. A duty cycle of the array light source in a slow-axis direction is a total effective light emitting length of the array light source in the slow-axis direction/a total physical length of the array light source in the slow-axis direction.

The array light source is disposed at the first preset distance from the object focus of the first collimator. This helps further improve uniformity of the second light beam in the first direction.

In a possible implementation, there is an association relationship among a focal length $f_1$ of the first collimator, a length d of the array light source in the first direction, and the first preset divergence angle $u_1'$. Further, the association

relationship satisfies the following Formula 1:

$$u_1'/2 = \arctan(d/2f_1) \pm \delta_1 \quad \text{Formula 1}$$

Herein, $\delta_1$ is a range of an allowed error in the first direction.

The focal length $f_1$ of the first collimator may be determined by using the foregoing Formula 1.

In a possible implementation, the first collimator includes at least one aspheric mirror, and the aspheric mirror includes a one-dimensional cylindrical mirror (or referred to as a cylindrical lens).

An elliptical light beam focus may be obtained by using the one-dimensional cylindrical mirror, and may be used to compensate for the light beam or astigmatism of the transmitting module. In addition, the one-dimensional cylindrical mirror may focus or defocus light only in the first direction, without affecting a wavefront curvature in a second direction. Further, if at least two one-dimensional cylindrical mirrors are used for the first collimator, aberration in the first direction may be corrected.

In a possible implementation, the transmitting module further includes a first stop, and the first stop is located between the first collimator and the array light source.

The first stop may allow the first light beam in an effective field of view in the first direction to pass through, and may suppress background stray light outside the effective field of view in the first direction to pass through. This helps reduce impact of the stray light.

In a possible implementation, the optical shaping assembly is further configured to adjust, in a second direction, a second divergence angle of the first light beam from the array light source to a second preset divergence angle. Further, optionally, the optical shaping assembly is further configured to uniformize, in the second direction, the first light beam from the array light source.

The optical shaping assembly shapes the first light beam in the second direction, so that a divergence angle of the second light beam in the second direction can be the second preset divergence angle. Further, energy density of a light spot formed by the second light beam in the second direction may also be uniform.

In a possible implementation, the optical shaping assembly further includes a second collimator.

The divergence angle and uniformity of the first light beam emitted by the array light source may be adjusted in the second direction by using the second collimator. This may also be understood as follows: The second collimator may be used to perform, in the second direction, a divergence angle scaling on the first light beam emitted by the array light source, to obtain the second light beam, and then the second light beam is freely propagated for aliasing and uniformization.

In a possible implementation, there is an association relationship among a focal length $f_2$ of the second collimator, a length h of the array light source in the second direction, and the second preset divergence angle $u_2'$. Further, the association relationship satisfies the following Formula 2:

$$u_2'/2 = \arctan(d/2f_2) \pm \delta_2 \quad \text{Formula 2}$$

Herein, $\delta_2$ is a range of an allowed error.

The focal length $f_2$ of the second collimator may be determined by using the foregoing Formula 2.

In a possible implementation, the second collimator includes at least one aspheric mirror, and the aspheric mirror includes a one-dimensional cylindrical mirror.

An elliptical light beam focus may be obtained by using the one-dimensional cylindrical mirror, and may be used to compensate for the light beam or astigmatism of the transmitting module. In addition, the one-dimensional cylindrical mirror may focus or defocus light only in the second direction, without affecting a wavefront curvature in the first direction. Further, if at least two one-dimensional cylindrical mirrors are used for the second collimator, aberration in the second direction may be corrected.

In a possible implementation, the transmitting module further includes a second stop, and the second stop is located between the second collimator and the array light source.

The second stop may allow the first light beam in an effective field of view in the second direction to pass through, and may suppress background stray light outside the effective field of view in the second direction to pass through. This helps reduce impact of the stray light.

In a possible implementation, a focusing line of the first collimator is perpendicular to that of the second collimator.

The focusing line of the first collimator is perpendicular to the focusing line of the second collimator. In this way, the light beams in the first direction and the second direction do not affect each other.

In a possible implementation, an optical axis of the first collimator is parallel to or coincides with that of the second collimator.

In a possible implementation, the transmitting module further includes a reflective element, and the reflective element is located between the first collimator and the second collimator.

A direction of a propagation optical path of the first light beam emitted by the array light source may be changed by using the reflective element. This helps reduce an optical path length of the first light beam in the slow-axis direction, thereby helping reduce a size of the transmitting module in the first direction and further helping miniaturize the transmitting module.

For example, the reflective element includes a reflective prism or a planar reflective mirror.

In a possible implementation, the optical shaping assembly includes a two-dimensional focal power shaping element. The two-dimensional focal power shaping element is configured to: adjust, in the first direction, the first divergence angle of the first light beam from the array light source to the first preset divergence angle, uniformize the first light beam, and adjust, in the second direction, the second divergence angle of the first light beam from the array light source to the second preset divergence angle, to obtain the second light beam.

Both the divergence angle and uniformity of the first light beam emitted by the array light source in the first direction and the second direction can be adjusted by using the two-dimensional focal power shaping element.

For example, the two-dimensional focal power shaping element includes at least one spheric lens or at least one two-dimensional focal power cylindrical lens.

In a possible implementation, the transmitting module further includes a refractive prism. The refractive prism is configured to adjust a propagation optical path of the second light beam, and after the propagation optical path is adjusted, energy density of a middle region of a light spot formed by the second light beam is greater than energy density of an edge region of the light spot formed by the second light beam.

Light of an upper half part of the second light beam may be deflected downward, and light of a lower half part of the second light beam may be deflected upward by using the refractive prism. In this way, an overlapping part is generated, and after the propagation optical path is adjusted, the energy density of the middle region of the light spot formed by the second light beam is greater than the energy density of the edge region of the light spot formed by the second light beam. This helps improve a distance measuring capability of the second light beam in the middle region.

In a possible implementation, a shape of the light spot formed by the second light beam after the propagation optical path is adjusted is " ⌐⊓⌐ " or a shape similar to " ⌐⊓⌐ ".

Energy density of a convex part in the light spot in the " ⌐⊓⌐ " shape or the shape similar to " ⌐⊓⌐ " is higher than energy density of two sides.

In a possible implementation, a first optical axis of the first collimator is perpendicular to a second optical axis of the second collimator.

In a possible implementation, the first direction is perpendicular to the second direction.

In a possible implementation, the first direction is a slow-axis direction of the optical shaping assembly, and/or the second direction is a fast-axis direction of the optical shaping assembly.

According to a second aspect, this application provides a detection apparatus. The detection apparatus includes a receiving module and the transmitting module according to any one of the first aspect and the possible implementations of the first aspect. The receiving module is configured to receive an echo signal, and the echo signal is a signal obtained through reflecting a second light beam by a target in a detection region.

For technical effects that can be achieved in the second aspect, refer to descriptions of beneficial effects in the first aspect. Details are not described herein again.

In a possible implementation, the detection apparatus further includes a scanning module, and the scanning module is located at a beam waist of the second light beam. The scanning module is configured to reflect, to the detection region, the second light beam from an optical shaping assembly.

A size of a light beam near a light outlet of the beam shaping component may be compressed by using the transmitting module. The scanning module is placed at the beam waist. A scanning module with a small reflective surface may be used. This helps reduce a size of the scanning module and further reduce a size of the entire detection apparatus.

According to a third aspect, this application provides a terminal device. The terminal device includes a control apparatus and the detection apparatus according to any one of the second aspect and the possible implementations of the second aspect.

For technical effects that can be achieved in the third aspect, refer to descriptions of beneficial effects in the second aspect. Details are not described herein again.

**BRIEF DESCRIPTION OF DRAWINGS**

FIG. 1a is a diagram of an optical path of a light beam propagated through a lens according to this application;
FIG. 1b is a diagram of an optical path of a light beam propagated through a lens according to this application;
FIG. 1c is a diagram of a beam waist of a light beam according to this application;
FIG. 2 is a diagram of a possible application scenario according to this application;

FIG. 3 is a diagram of a structure of a transmitting module according to this application;

FIG. 4 is a diagram of a structure of a one-dimensional array light source according to this application;

FIG. 5 is a diagram of a structure of a two-dimensional array light source according to this application;

FIG. 6 shows an optical path of shaping, by an optical shaping assembly, a first light beam in a slow-axis direction according to this application;

FIG. 7 is a diagram of a location relationship between an array light source and a first collimator according to this application;

FIG. 8 is a diagram of a structure of another transmitting module according to this application;

FIG. 9a is a diagram of a structure of another transmitting module according to this application;

FIG. 9b is a diagram of a three-dimensional structure of a transmitting module according to this application;

FIG. 10a is a diagram of a structure of still another transmitting module according to this application;

FIG. 10b is a diagram of a three-dimensional structure of still another transmitting module according to this application;

FIG. 11a is a diagram of a structure of still another transmitting module according to this application;

FIG. 11b is a diagram of a three-dimensional structure of still another transmitting module according to this application;

FIG. 12a is a diagram of uniformity, in a slow-axis direction, of a light spot formed by a second beam according to this application;

FIG. 12b is a diagram of a simulated relationship between uniformity, in a slow-axis direction, of a light spot formed by a second light beam and an irradiation distance of the second light beam according to this application;

FIG. 13a is a diagram of a structure of still another transmitting module according to this application;

FIG. 13b is a diagram of a three-dimensional structure of still another transmitting module according to this application;

FIG. 14a is a diagram of forming a light spot in a " ﹂Π﹂ " shape by a second light beam according to this application;

FIG. 14b is a diagram of an intensity distribution curve of a far-field light spot in a slow-axis direction according to this application;

FIG. 15 is a diagram of a structure of still another transmitting module according to this application;

FIG. 16 is a diagram of a structure of a detection apparatus according to this application;

FIG. 17 is a diagram of a structure of a detection component according to this application; and

FIG. 18 is an example of a functional block diagram of a vehicle according to this application.

## DESCRIPTION OF EMBODIMENTS

The following describes in detail embodiments of this application with reference to the accompanying drawings.

Some terms in this application are described below. It should be noted that these explanations are for ease of understanding by a person skilled in the art, and are not intended to limit the protection scope claimed by this application.

1. Lens

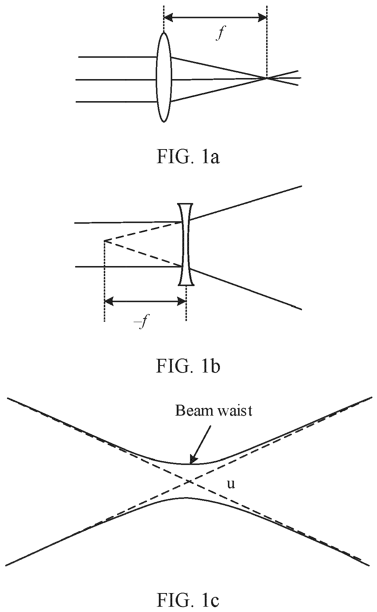

The lens is a transparent optical device that affects a wavefront curvature of a light beam that passes through. The light beam enters from one side and goes out from the other side. A function of the lens is to change the wavefront curvature of the light beam, that is, to focus or defocus the light beam. For example, a collimated light beam whose wavefront is about a plane is converted into a light beam whose wavefront is curved, and the light beam is focused to a focus. Such a lens is used as a focusing lens, as shown in FIG. 1a. A same lens as the foregoing may alternatively convert a divergent light beam into a collimated light beam. In this case, the lens is used as a collimating lens. With reference to FIG. 1a, in this case, the light beam is incident from the right side. A lens with a concave surface may change a collimated or convergent light beam into a divergent light beam. With reference to FIG. 1b, such a lens may alternatively be configured to change a divergent light beam into a collimated light beam. With reference to FIG. 1b, in this case, the light beam is incident from the right side.

2. Focal power

The focal power is equal to a difference between a convergence degree of an image light beam and a convergence degree of an object light beam, and may represent an ability of an optical element to deflect a light beam. The focal power is usually represented by a letter $\varphi$. Generally, the focal power is represented as a reciprocal of an image focal length of a lens (a refractive index of the air is considered as approximately being 1). A unit of the focal power is diopter (D), and 1 diopter (D)=$1m^{-1}$.

Characteristics such as different thicknesses of the optical element, non-uniformity of the refractive index and the like, and different curvatures of front and rear surfaces (a radius of curvature of a convex surface of a lens is a positive number, and a radius of curvature of a concave surface of the lens is a negative number) cause a difference between actual focal power and theoretical focal power of the optical element. Therefore, the actual focal power may also be referred to as equivalent focal power. In the following, unless otherwise stated, focal power refers to the actual focal power of the optical element.

### 3. Light beam divergence angle

The light beam divergence angle (u) is used to measure a speed at which a light beam diverges from a beam waist, as shown in FIG. 1c. The beam waist of the light beam is a part where a light beam radius (used to measure a transverse extension of the light beam) is the smallest in a propagation direction of the light beam. A light beam radius of the part where the light beam radius is the smallest is a beam waist radius. For a Gaussian beam, the light beam radius is generally defined as a corresponding radius at $1/e^2$ of a peak intensity.

### 4. Light uniformization (uniform light)

Light uniformization means uniformizing energy of a light beam.

### 5. Light spot

The light spot is generally energy density (or referred to as an intensity) distribution formed by a light beam in angular space. The energy density distribution of the light spot may be in the following form: low at two ends and high in the middle (or referred to as a "⊓" shape or a shape similar to "⊓"). For example, the energy density distribution may be in a form of normal distribution (Normal distribution) or a form similar to normal distribution (Normal distribution). For another example, the energy density of the light spot may alternatively be evenly distributed.

### 6. Region of interest (region of interest)

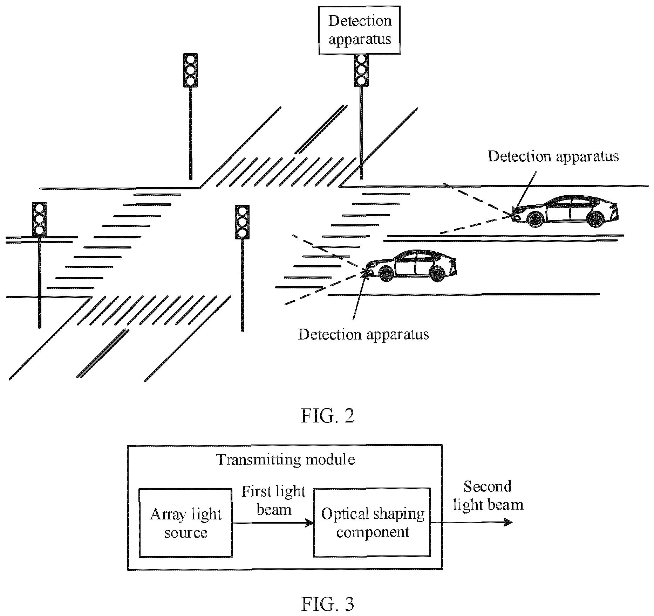

In machine vision and image processing, the region of interest is a region that needs to be processed and that is outlined by a box, a circle, an ellipse, or an irregular polygon from a processed image.
The foregoing describes some terms used in this application, and the following describes possible application scenarios of this application.
In a possible implementation, the transmitting module may be integrated into a detection apparatus, and the detection apparatus may be installed on a vehicle. FIG. 2 is a diagram of an example of a possible application scenario according to this application. In the application scenario, an example in which a detection apparatus is installed in front of a vehicle is used. It may be understood that the detection apparatus may alternatively be installed at another location of the vehicle, for example, any one or more directions of the four directions: front, rear, left, and right, to capture information about an environment around the vehicle.
In the application scenario, a working principle of the detection apparatus is as follows: The detection apparatus emits a light beam to a detection region; if a target exists in the detection region, the target may reflect the received light beam back to the detection apparatus (the reflected light beam may be referred to as an echo signal), and the detection apparatus determines associated information of the target based on the echo signal. Specifically, the detection apparatus may obtain, in real time or periodically, longitude and latitude, a speed, and an orientation of the vehicle, or associated information (for example, a distance of a target, a speed of a target, and/or a posture of a target) of the target (for example, another surrounding vehicle, a pedestrian, or an obstacle) in a specific range. Further, optionally, the detection apparatus may send the obtained information to a control apparatus in the vehicle, so that the control apparatus performs vehicle path planning and the like based on the obtained information. For example, a location of the vehicle may be determined by using the longitude and latitude, or a traveling direction and destination of the vehicle in a future period of time are determined by using the speed and orientation, or a quantity and density of obstacles around the vehicle are determined by using the distances from the surrounding objects. Further, optionally, assisted driving, autonomous driving, or the like of the vehicle may be implemented in combination with a function of an advanced driver-assistance system (advanced driving assistant system, ADAS).
It should be understood that the foregoing application scenario is merely an example. The detection apparatus (including the transmitting module provided in this application) provided in this application may be further used in another possible scenario, not limited to the scenario shown in the foregoing example. For example, the detection apparatus may alternatively be installed on a vehicle as a vehicle light. For another example, the detection apparatus may alternatively be installed on an uncrewed aerial vehicle as an airborne detection apparatus. For another example, the detection apparatus may alternatively be installed in a road side unit (road side unit, RSU) as a roadside traffic detection apparatus, to implement intelligent vehicle-road cooperative communication and the like as shown in FIG. 2. For another example, the detection apparatus may alternatively be installed on an automated guided transport vehicle (automated guided vehicle, AGV). The AGV is a transport vehicle equipped with an automatic navigation apparatus, for example, an electromagnetic or optical navigation apparatus, capable of traveling along a specified navigation path, and having safety protection and various load transfer functions. For another example, the detection apparatus may alternatively be installed on a stage as a stage illumination light. For another example, the detection apparatus may alternatively be installed on photoetching machine. For another example, the detection apparatus may alternatively be installed on a medical apparatus. Details are not listed herein one by one. It should be noted that the application scenarios described in this application are intended to describe the technical solutions in this application more clearly, and do not constitute a limitation on the technical solutions provided in this application. In these possible application scenarios, a uniform light spot may be required, or a light spot in a " 凸 " shape or a shape similar to " 凸 " may be required.

For example, the foregoing application scenarios may be applied to fields such as unmanned driving, autonomous driving, assisted driving, intelligent driving, networked vehicles, security surveillance, biomedical care, photoetching, or surveying and mapping (for example, three-dimensional drawing).

As described in the background, in the conventional technology, micro-nano optical elements such as an MLA or a DOE are usually used for light beam shaping. However, a processing process of these micro-nano optical elements is complex, and a complex optical path needs to be designed.

In view of the foregoing problem, this application provides a transmitting module. The transmitting module may shape a light beam by using a conventional lens. This helps reduce complexity of a production process of the transmitting module and complexity of optical path design.

Based on the foregoing content, the following specifically describes the transmitting module provided in this application with reference to the accompanying drawings.

FIG. 3 is a diagram of a structure of a transmitting module according to this application. The transmitting module may include an array light source and an optical shaping assembly. The array light source is configured to emit a first light beam. A divergence angle of the first light beam is a first divergence angle. The first divergence angle is an inherent divergence angle of the array light source in a first direction. The optical shaping assembly includes a spheric lens and/or an aspheric lens, which is configured to: adjust, in the first direction, the first divergence angle of the first light beam emitted by the array light source to a first preset divergence angle, and uniformize the first light beam to obtain a second light beam. A divergence angle of the second light beam is the first preset divergence angle, and energy density (or referred to as an intensity) of a light spot formed by the second light beam in the first direction is uniform.

Based on the transmitting module, the first light beam emitted by the array light source can be shaped (including divergence angle adjustment and uniformization) in the first direction by using the optical shaping assembly, to obtain the second light beam at the first preset divergence angle. In addition, the energy density of the light spot formed by the second light beam is uniform. Further, a production process of the spheric lens and/or aspheric lens included in the optical shaping assembly is simple. In other words, based on the foregoing transmitting module, a good shaping effect on the first light beam emitted by the array light source can be achieved by using the spheric lens and/or aspheric lens that are/is produced by using the simple process.

In a possible implementation, the optical shaping assembly is further configured to adjust, in a second direction, a second divergence angle of the first light beam from the array light source to a second preset divergence angle. Further, the optical shaping assembly is further configured to uniformize, in the second direction, the light of the first light beam from the array light source, to obtain the second light beam. The divergence angle of the first light beam in the second direction is the second divergence angle, and the divergence angle of the second light beam in the second direction is the second preset divergence angle.

The first direction is perpendicular to the second direction. For example, the first direction is a slow-axis direction of the optical shaping assembly, and/or the second direction is a fast-axis direction of the optical shaping assembly.

In the following description, an example in which the first direction is the slow-axis direction of the optical shaping assembly and the second direction is the fast-axis direction of the optical shaping assembly is used for description. In other words, in the following, the slow-axis direction may be replaced with the first direction, and the fast-axis direction may be replaced with the second direction.

The following separately describes functional components and structures shown in FIG. 3, to provide specific example implementation solutions.

1. Array light source

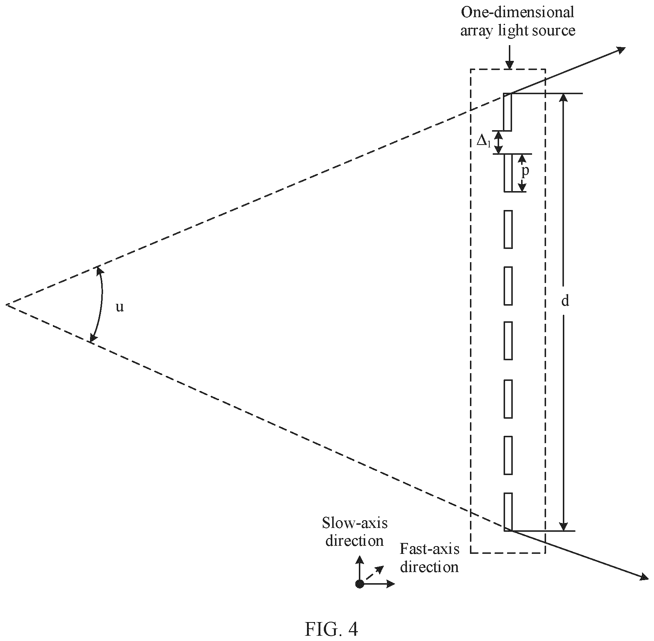

In a possible implementation, the array light source includes m×n light sources, where m is an integer greater than 1, and n is a positive integer. Specifically, the array light source may be a one-dimensional array light source (or referred to as a linear array), as shown in FIG. 4. In this example, the array light source includes eight light sources. The eight light sources are arranged in a strip shape in a slow-axis direction (namely, a vertical direction shown in FIG. 4), and a spacing between two adjacent light sources is $\Delta_1$. For example, the spacing $\Delta_1$ between the two adjacent light sources is 400 (micrometers) $\mu$m. Further, optionally, a size of a light emitting region (or referred to as a light emitting surface) of each light source in the array light source may be represented as p×k, as shown in FIG. 4. Herein, p represents a length of a slow-axis direction of the light emitting region of the light source, and k represents a length of a fast-axis direction of the light emitting region of the light source. For example, a size of a light emitting region of the light source is 220 $\mu$m$\times$10 $\mu$m. On the basis of this, a duty cycle (or referred to as a filling rate) of the array light source in the slow-axis direction is a total effective light emitting length of the array light source in the slow-axis direction/a total physical length of the array light source in the slow-axis direction, and may be represented as $(8\times p)/d$. Herein, d represents the total physical length of the array light source in the slow-axis direction, and specifically, $d=(m-1)\times(\Delta_1+p)+p$. A first divergence angle of a first light beam emitted by the array light source in the slow-axis direction is $u_1$.

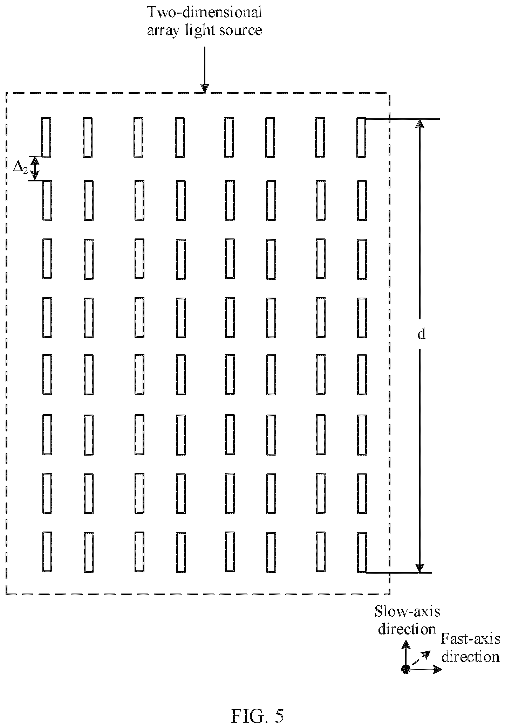

Alternatively, the array light source may be a two-dimensional array (or referred to as a planar array). As shown in FIG. 5, for example, the array light source includes $8\times8$ light sources, and in a slow-axis direction, a spacing between two adjacent light sources is $\Delta_2$. Herein, $\Delta_1$ may be the same as or different from $\Delta_2$. This is not limited in this application. Further, for a light emitting region of each light source in the array light source, refer to the description of FIG. 4. Details are not described herein again. Based on FIG. 5, a duty cycle of the array light source in the slow-axis direction may be represented as $(8\times p)/d$, and $d=(m-1)\times(\Delta_2+p)+p$.

The array light source may implement independent addressing. Independent addressing means that a light source in the array light source may be independently selected (or referred to as lighted, turned on, or powered on), and the selected light source may be used to emit the first light beam. Specifically, a drive current may be input to a light source that needs to be selected, to implement selection of the light source.

In a possible implementation, an addressing manner of the array light source may include but is not limited to selecting the light source column by column, selecting the light source row by row, selecting the light source based on a region of interest, or the like. It may be understood that the addressing manner of the array light source is further related to a physical connection relationship of the light sources. With reference to FIG. 5, for example, if light sources in a same column of the array light source are connected in series, and light sources in different columns are connected in parallel, the light sources in the array light source may be selected column by column. For another example, if light sources in a same row of the array light source are connected in series, and light sources in different rows are connected in parallel, the light sources in the array light source may be selected row by row. For another example, if light sources on each diagonal in the array light source are connected in series, and light sources on different diagonals are connected in parallel, the light sources in the array light source may be selected diagonal by diagonal.

For example, the light source in the array light source may be, for example, a vertical cavity surface emitting laser (vertical cavity surface emitting laser, VCSEL), an edge emitting laser (edge emitting laser, EEL), an all-solid-state semiconductor laser (diode-pumped solid-state laser, DPSSL), an optical fiber laser, or a laser diode (laser diode, LD).

2. Optical shaping assembly

In a possible implementation, the optical shaping assembly may implement at least the following two functions: adjusting a divergence angle of the first light beam from the array light source, and uniformizing the first light beam. Specifically, the optical shaping assembly is configured to: adjust, in the slow-axis direction, the first divergence angle of the first light beam emitted by the array light source to the first preset divergence angle, and further uniformize the first light beam in the slow-axis direction, and/or adjust, in the fast-axis direction, the second divergence angle of the first light beam emitted by the array light source to the second preset divergence angle, and further uniformize the first light beam in the fast-axis direction.

The following describes a process in which the optical shaping assembly shapes the first light beam in the fast-axis direction and the slow-axis direction.

Case 1: The optical shaping assembly shapes the first light beam in the slow-axis direction.

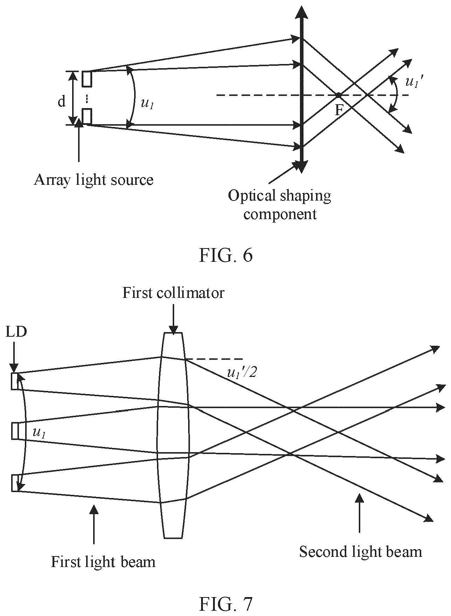

In a possible implementation, the optical shaping assembly is configured to: shape, in the slow-axis direction, the first divergence angle $u_1$ of the first light beam emitted by the array light source into the first preset divergence angle (or referred to as a first projection divergence angle) $u_1'$, and further uniformize the first light beam, as shown in FIG. 6. This may also be understood as follows: The second light beam is obtained through shaping the first light beam from the array light source by the optical shaping assembly, a divergence angle of the second light beam in the slow-axis direction is the first preset divergence angle $u_1'$, and uniformity (which may be determined by using the following Formula 3) of a light spot formed by the second light beam in the slow-axis direction is greater than first preset uniformity. The first divergence angle $u_1$ of the first light beam is an inherent divergence angle of the first light beam in the slow-axis direction. The first preset divergence angle $u_1'$ and the first preset uniformity may be obtained in advance based on an actual requirement.

$$U=1-(I_{max}-I_{min})/(I_{max}+I_{min}) \text{ Formula 3}$$

U represents the uniformity of the light spot formed by the second light beam in the slow-axis direction, $I_{max}$ represents a maximum intensity of the light spot formed by the second light beam in the slow-axis direction, and $I_{min}$ represents a minimum intensity of the light spot formed by the second light beam in the slow-axis direction.

It may be understood that the first divergence angle may be greater than the first preset divergence angle, or the first divergence angle may be smaller than the first preset divergence angle. This is not limited in this application.

Case 2: The optical shaping assembly shapes the first light beam in the fast-axis direction.

In a possible implementation, the optical shaping assembly is configured to: shape, in the fast-axis direction, the second divergence angle $u_2$ of the first light beam from the array light source into the second preset divergence angle (or referred to as a second projection divergence angle) $u_2'$, and further uniformize the first light beam. In other words, the second light beam is obtained through shaping the first light beam emitted by the array light source by the optical shaping assembly, a divergence angle of the second light beam in the fast-axis direction is the second divergence angle $u_2'$, and uniformity of a light spot formed by the second light beam in the fast-axis direction is greater than second preset uniformity. The first divergence angle $u_2$ of the first light beam is an inherent divergence angle of the first light beam in the fast-axis direction. The second preset divergence angle $u_2'$ and the second preset uniformity may be obtained in advance based on an actual requirement.

It may be understood that the second divergence angle may be greater than the second preset divergence angle, or the second divergence angle may be smaller than the second preset divergence angle. This is not limited in this application. In addition, a size relationship between the first preset divergence angle and the second preset divergence angle is not limited in this application, and a size relationship between the first preset uniformity and the second preset uniformity is not limited either.

It should be noted that the optical shaping assembly may perform shaping only in the slow-axis direction (for example, may include adjusting a divergence angle and/or uniformity in the slow-axis direction). On the basis of this, the optical shaping assembly may include the following Structure 1. Alternatively, shaping may be performed only in the fast-axis direction. On the basis of this, the optical shaping assembly may include the following Structure 2. Alternatively, shaping may be performed in both the fast-axis direction and the slow-axis direction. On the basis of this, the optical shaping assembly may include the following Structure 1 and Structure 2, or may include at least one two-dimensional focal power shaping element. This is described in detail below.

Structure 1: The optical shaping assembly includes a first collimator.

The first collimator may also be referred to as a slow-axis collimator (slow-axis collimator, SAC). The first collimator is configured to shape the first divergence angle $u_1$ of the first light beam from the array light source in the slow-axis direction into the first preset divergence angle $u_1'$. With reference to FIG. 6, the optical shaping assembly in the foregoing FIG. 6 may be specifically replaced with the first collimator. Further, the first collimator is further configured to uniformize the first light beam in the slow-axis direction. In other words, the divergence angle of the second light beam in the slow-axis direction obtained through shaping the first light beam from the array light source by the first collimator is the first preset divergence angle $u_1'$, and the uniformity of the light spot formed by the second light beam in the slow-axis direction is greater than the first preset uniformity.

For example, the first collimator may include at least one aspheric lens, for example, a one-dimensional cylindrical mirror. The one-dimensional cylindrical mirror means that focal power of the cylindrical mirror in a direction is not 0, and focal power of the cylindrical mirror in other directions is 0. This may also be understood as follows: There is a curvature of the one-dimensional cylindrical mirror only in a direction, and there is no curvature in another direction. The one-dimensional cylindrical mirror may include but is not limited to a plano-convex cylindrical mirror (or referred to as a plano-convex cylindrical lens), a plano-concave cylindrical mirror (or referred to as a plano-concave cylindrical lens), a double-convex cylindrical mirror (a double-convex cylindrical lens), a double-concave cylindrical mirror (a double-concave cylindrical lens), or the like. An elliptical light beam focus may be obtained by using the one-dimensional cylindrical mirror, and may be used to compensate for the light beam or astigmatism of the transmitting module. In addition, the one-dimensional cylindrical mirror may focus or defocus light only in the first direction, without affecting a wavefront curvature in the second direction. It should be noted that, if a length d of the array light source in the slow-axis direction is long, aberration correction needs to be considered when a structure of the optical shaping assembly in the slow-axis direction is designed. In view of this, at least two one-dimensional cylindrical mirrors may be used for the first collimator to correct aberration in the slow-axis direction. If the first collimator includes at least two one-dimensional cylindrical mirrors, and each one-dimensional cylindrical mirror has a corresponding focus and focal length, a focus of the first collimator in this application may be an equivalent focus of the plurality of one-dimensional cylindrical mirrors included in the first collimator, and a focal length of the first collimator in this application may be an equivalent focal length of the plurality of one-dimensional cylindrical mirrors included in the first collimator.

In a possible implementation, the length d of the array light source in the slow-axis direction, the focal length $f_1$ of the first collimator, and the first preset divergence angle $u_1'$ satisfy an association relationship provided in the following Formula 1:

$$u_1'/2 = \arctan(d/2f_1) \pm \delta_1 \quad \text{Formula 1}$$

Herein, $\delta_1$ is a range of an allowed error in the slow-axis direction. For example, the allowed error includes but is not limited to an error caused by an engineering error.

According to the foregoing Formula 1, the focal length $f_1$ of the first collimator may be determined. The focal length $f_1$ of the first collimator determines a location of the first collimator and a divergence angle of the second light beam obtained through shaping by the first collimator in the slow-axis direction. Generally, a larger focal length of the first collimator indicates a smaller divergence angle of the second light beam in the slow-axis direction. The focal length of the first collimator is a focal length of the optical shaping assembly in the slow-axis direction. In other words, the focal length $f_1$ of the first collimator may be designed to scale in or scale out an image of the array light source, to form different divergence angles in the slow-axis direction.

In a possible implementation, the array light source may be located on an object focus of the first collimator. However, to achieve a good uniformization effect, the array light source may alternatively not be placed on the object focus of the first collimator, and fine tuning may be performed before and after the object focus of the first collimator. An amplitude (namely, a first preset distance) of fine tuning is related to a duty cycle of the array light source in the slow-axis direction and the first divergence angle $u_1$ of the first light beam. In other words, the array light source is located at the first preset distance of the object focus of the first collimator, and the first preset distance is related to the duty cycle of the array light source in the slow-axis direction and the first divergence angle $u_1$ of the first light beam. This may also be understood as follows: A distance between the location of the array light source and the object focus of the first collimator is the first preset distance. Specifically, the first preset distance is a constant value that is at least related to the duty cycle of the array light source in the slow-axis direction and the first divergence angle $u_1$ of the first light beam. In other words, a value of the first preset distance is at least related to the duty cycle of the array light source in the slow-axis direction and the first divergence angle $u_1$ of the first light beam. A specific relationship may be adjusted through model simulation. It may be understood that the location of the array light source may be further related to a total length of an optical path allowed by the transmitting module, spatial angle distribution of the first light beam emitted from the array light source, and/or the like.

After the location of the array light source is fine-tuned, the divergence angle of the second light beam obtained through shaping the first light beam emitted by the array light source by the first collimator may deviate from the required first preset divergence angle $u_1$'. If there is a high requirement for precision of the divergence angle of the second light beam, the focal length of the first collimator may be fine-tuned and/or the focal length of the first collimator may be redesigned until the obtained divergence angle of the second light beam is the required first preset divergence angle $u_1$'.

FIG. 7 is a diagram of a location relationship between an array light source and a first collimator according to this application. In this example, an array light source includes $3 \times 1$ LDs, and a first collimator includes a double-convex cylindrical mirror. A divergence angle of a second light beam obtained through pass of a first light beam emitted by the three LDs through the first collimator is a first preset divergence angle $u_1$'. For example, a first divergence angle $u_1$ of the first light beam emitted from the three LDs in a slow-axis direction is 13°, and a first preset divergence angle $u_1$' of the second light beam obtained through shaping by the first collimator is 25°. Further, the second light beam is freely propagated for aliasing and uniformization, and a light spot that is uniform in the slow-axis direction may be formed at a specific distance to an infinite distance.

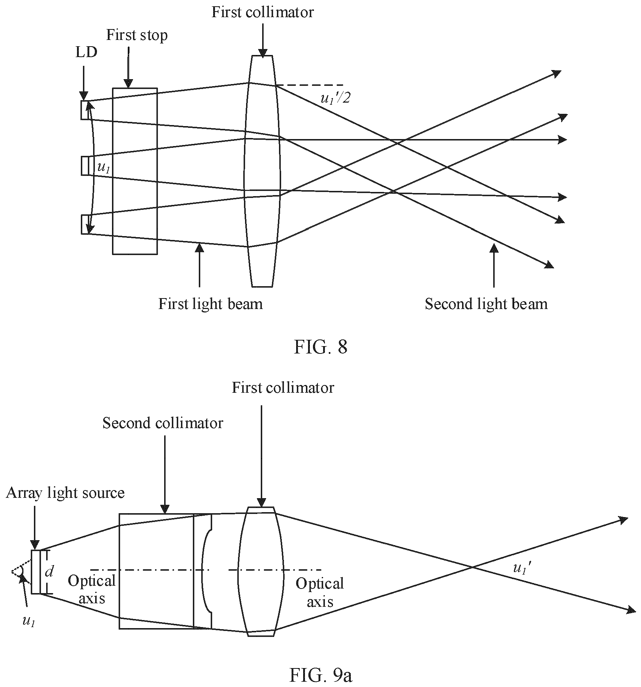

Further, optionally, a transmitting module may further include a first stop, as shown in FIG. 8. The first stop is located between an array light source and a first collimator. The first stop is configured to filter a part of stray light in a slow-axis direction. The first stop may allow the first light beam in an effective field of view in the slow-axis direction to pass through, and may suppress background stray light outside the effective field of view in the slow-axis direction to pass through. This helps reduce the stray light.

In a possible implementation, the first stop may be, for example, a slit stop (or referred to as an aperture stop). For another example, the first stop may alternatively be produced by printing a required light transmission shape on glass or the like by using a silkscreen technology. The rest region is black ink, and light transmission is not allowed in the region of black ink.

Structure 2: The optical shaping assembly includes a second collimator.

The second collimator may also be referred to as a fast-axis collimator (fast-axis collimator, FAC). The second collimator is configured to shape the second divergence angle $u_2$ of the first light beam emitted by the array light source in the fast-axis direction into the second preset divergence angle $u_2$'. With reference to FIG. 6, the optical shaping assembly in the foregoing FIG. 6 may be specifically replaced with the second collimator. Further, the second collimator is further configured to uniformize the first light beam in the fast-axis direction. This may also be understood as follows: The divergence angle of the second light beam in the fast-axis direction obtained through pass of the first light beam from the array light source through the second collimator is the second preset divergence angle $u_2$', and uniformity of a light spot formed by the second light beam in the fast-axis direction is greater than the second preset uniformity. The uniformity of the light spot formed by the second light beam in the fast-axis direction may also be determined based on a principle of the foregoing Formula 3. Specifically, in the foregoing Formula 3, U represents the uniformity of the light spot formed by the second light beam in the fast-axis direction, $I_{max}$ represents a maximum intensity of the light spot formed by the second light beam in the fast-axis direction, and $I_{min}$ represents a minimum intensity of the light spot formed by the second light beam in the fast-axis direction.

For example, the second collimator may also include at least one one-dimensional cylindrical mirror. For a description of the one-dimensional cylindrical mirror, refer to the related description of the foregoing Structure 1. Details are not described herein again. It should be noted that, if a length of the array light source in the fast-axis direction is long, aberration correction needs to be considered when a structure of the second collimator in the fast-axis direction is designed. In view of this, at least two one-dimensional cylindrical mirrors may be used for the second collimator to correct aberration in the fast-axis direction. If the second collimator includes at least two one-dimensional cylindrical mirrors, and each one-dimensional cylindrical mirror has a corresponding focus and focal length, a focus of the second collimator in this application may be an equivalent focus of the plurality of one-dimensional cylindrical mirrors included in the second collimator, and a focal length of the second collimator in this application may be an equivalent focal length of the plurality of one-dimensional cylindrical mirrors included in the second collimator.

In a possible implementation, the length h of the array light source in the fast-axis direction, the focal length $f_2$ of the second collimator, and the second preset divergence angle $u_2'$ satisfy an association relationship shown in the following Formula 2.

$$u_2'/2 = \arctan(h/2f_2) \pm \delta_2 \quad \text{Formula 2}$$

Herein, $\delta_2$ is a range of an allowed error in the fast-axis direction. The allowed error includes but is not limited to an error caused by an engineering error.

According to the foregoing Formula 2, the focal length $f_2$ of the second collimator may be determined. The focal length $f_2$ of the second collimator determines a location of the second collimator and a divergence angle of the second light beam obtained through shaping by the second collimator in the fast-axis direction. Generally, a larger focal length of the second collimator indicates a smaller divergence angle of the second light beam in the fast-axis direction. The focal length of the second collimator is a focal length of the optical shaping assembly in the fast-axis direction. In other words, the focal length $f_2$ of the second collimator may be designed to scale in or scale out an image of the array light source, to form different divergence angles in the fast-axis direction.

Further, optionally, the transmitting module may further include a second stop, and the second stop is located between the array light source and the second collimator. The second stop is configured to filter a part of stray light in the fast-axis direction. The second stop may allow the first light beam in an effective field of view in the fast-axis direction to pass through, and may suppress background stray light outside the effective field of view in the fast-axis direction to pass through. This helps reduce the stray light.

In a possible implementation, the second stop may be, for example, a slit stop (or referred to as an aperture stop or an effective stop). For another example, the second stop may alternatively be produced by printing a required light transmission shape on glass or the like by using a silkscreen technology. The rest region is black ink, and light transmission is not allowed in the region of black ink.

It should be noted that, if there is a high requirement for uniformity in the slow-axis direction, the array light source may be disposed at the first preset distance from the object focus of the first collimator. For example, the object focus of the first collimator is $F_1$, and an object focus of the second collimator is $F_2$. A difference between $F_1$ and $F_2$ is a first preset distance. If there is a high requirement for uniformity in the fast-axis direction, the array light source may be disposed at a second preset distance from the object focus of the second collimator. For example, the object focus of the first collimator is $F_1$, and the object focus of the second collimator is $F_2$. A difference between $F_1$ and $F_2$ is a second preset distance. Determining of the second preset distance is similar to determining of the first preset distance. The second preset distance is a constant value at least related to the duty cycle of the array light source in the fast-axis direction and the second divergence angle $u_2$ of the first light beam. For details, refer to the foregoing description of the first preset distance. Details are not described herein again.

In this application, if the first light beam needs to be shaped in both the fast-axis direction and the slow-axis direction, the optical shaping assembly may include a first collimator and a second collimator. Based on a location relationship between the first collimator and the second collimator, the following example shows two possible cases.

Case 1: An optical axis of the first collimator is parallel to or coincides with an optical axis of the second collimator.

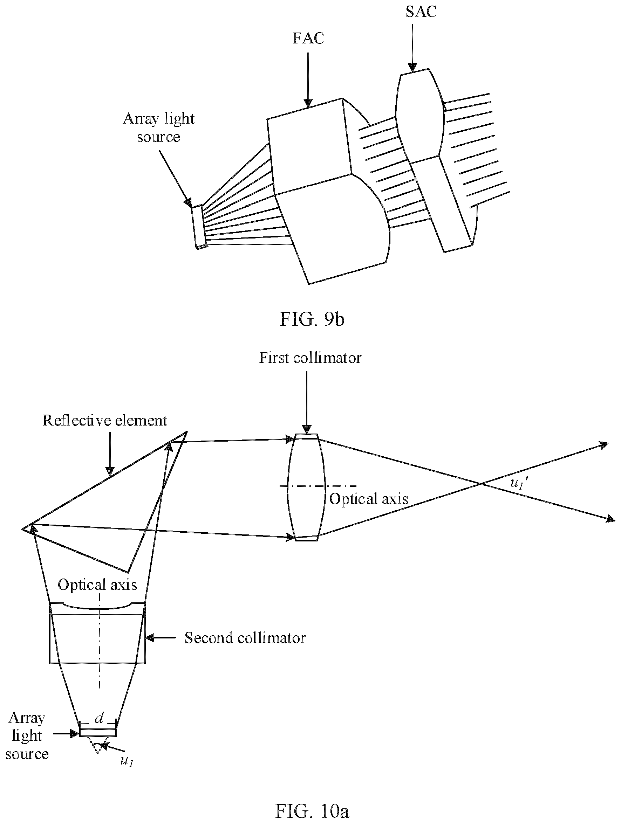

FIG. 9a and FIG. 9b are another two diagrams of a structure of a transmitting module according to this application. The transmitting module includes an array light source and an optical shaping assembly. The optical shaping assembly includes the first collimator and the second collimator. In this example, the first collimator is a double-convex cylindrical mirror, and the second collimator includes a plano-convex cylindrical mirror. The optical axis of the first collimator is parallel to or coincides with the optical axis of the second collimator. Further, optionally, a focusing line of the first collimator is perpendicular to a focusing line of the second collimator. A direction of the focusing line of the first collimator is the same as that of adjusting a divergence angle of a first light beam passing through and adjusted by the first collimator, and a direction of the focusing line of the second collimator is the same as that of adjusting a divergence angle of the first light beam passing through and adjusted by the second collimator. It may be understood that, if the focusing line of the first collimator is not perpendicular to that of the second collimator, light in the two directions affects each other. Therefore, the focusing line of the first collimator is perpendicular to the focusing line of the second collimator. In this way, the light beams in the first direction and the second direction do not affect each other. In a slow-axis direction, the second collimator is equivalent to a transparent glass plate, and does not change a first divergence angle of the first light beam that passes through the second collimator. Therefore, before the first light beam emitted from the array light source in the slow-axis direction passes through the first collimator, the first divergence angle of the first light beam remains unchanged. The first divergence angle of the first light beam is adjusted to a first preset divergence angle by the first collimator. Similarly, in a fast-axis direction, the first collimator is equivalent to a transparent glass plate, and does not change a second divergence angle of the first light beam that passes through the first collimator. Therefore, before the first light beam emitted from the array light source in the fast-axis direction passes through the second collimator, the second divergence angle of the first light beam remains unchanged. The second divergence angle of the first light beam is adjusted to a second preset divergence angle by the second collimator.

It may be understood that FIG. 9a shows an example of a propagation optical path in the slow-axis direction. Specifically, the first light beam emitted by the array light source is shaped by the second collimator in the fast-axis direction and propagated to the first collimator, and then shaped by the first collimator in the slow-axis direction, to obtain a second light beam. A divergence angle of the first light beam in the slow-axis direction is the first divergence angle, and a divergence angle of the second light beam in the slow-axis direction is the first preset divergence angle. Further, uniformity of a light spot formed by the second light beam in the slow-axis direction is greater than first preset uniformity. A divergence angle of the first light beam in the fast-axis direction is the second divergence angle, and a divergence angle of the second light beam in the fast-axis direction is the second preset divergence angle. Uniformity of a light spot formed by the second light beam in the fast-axis direction is greater than second preset uniformity.

Case 2: An optical axis of the first collimator is perpendicular to an optical axis of the second collimator.

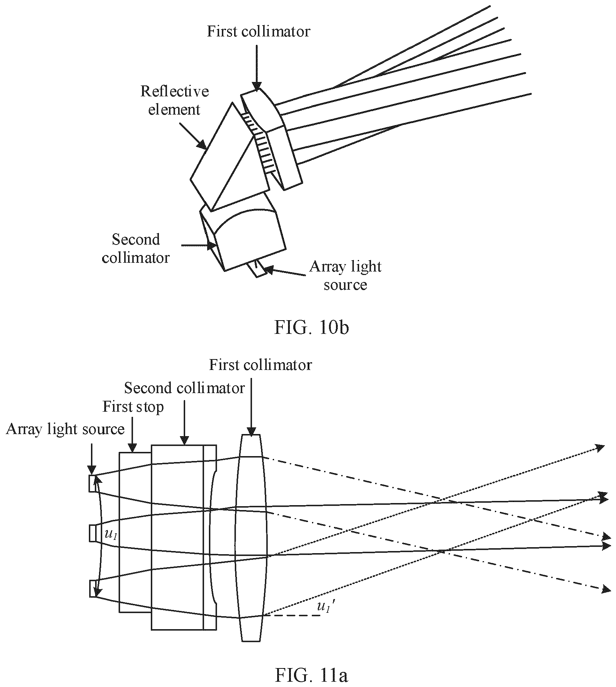

FIG. 10a and FIG. 10b are two diagrams of a structure of a transmitting module according to this application. The transmitting module includes an array light source, an optical shaping assembly, and a reflective element. The optical shaping assembly includes the first collimator and the second collimator, and the reflective element is located between the first collimator and the second collimator. The optical axis of the first collimator is perpendicular to the optical axis of the second collimator. Further, optionally, a focusing line of the first collimator is perpendicular to a focusing line of the second collimator. In this example, the first collimator and the second collimator are the same as those in FIG. 9a and FIG. 9b. For details, refer to the foregoing related descriptions. Details are not described herein again.

FIG. 10a shows a propagation optical path in a slow-axis direction. Specifically, a first light beam emitted by the array light source is shaped by the second collimator in a fast-axis direction and then propagated to the reflective element, reflected by the reflective element to the first collimator, and then shaped by the first collimator in the slow-axis direction, to obtain a second light beam. A divergence angle of the first light beam in the slow-axis direction is a first divergence angle, and a divergence angle of the second light beam in the slow-axis direction is a first preset divergence angle. Further, uniformity of a light spot formed by the second light beam in the slow-axis direction is greater than first preset uniformity. A divergence angle of the first light beam in the fast-axis direction is a second divergence angle, and a divergence angle of the second light beam in the fast-axis direction is a second preset divergence angle. Uniformity of a light spot formed by the second light beam in the fast-axis direction is greater than second preset uniformity. The reflective element may be, for example, a reflective prism (or referred to as a deflecting prism), or may be a planar reflective mirror. This is not limited in this application.

A direction of the propagation optical path of the first light beam emitted by the array light source may be changed by using the reflective element, so that the first collimator and the second collimator can be flexibly placed. In addition, compared with that in FIG. 9a and FIG. 9b, this helps reduce an optical path length of the first light beam in the slow-axis direction, thereby helping reduce a size of the transmitting module in the slow-axis direction and further helping miniaturize the transmitting module.

It should be noted that locations of the first collimator and the second collimator shown in FIG. 9a, FIG. 9b, FIG. 10a, and FIG. 10b are merely examples. For example, a sequence of the first collimator and the second collimator may alternatively be interchanged. This is not limited in this application. In addition, in the transmitting module shown in FIG. 9a and FIG. 9b, the array light source and the optical shaping assembly are coaxial. In the transmitting module shown in FIG. 10a and FIG. 10b, the array light source and the optical shaping assembly are non-coaxial. In a structure in which the array light source and the optical shaping assembly are non-coaxial, FIG. 10a and FIG. 10b show examples in which the first collimator and the second collimator are also non-coaxial. During specific implementation, the first collimator and the second collimator may alternatively be coaxial. On the basis of this, the reflective element may be located between the second collimator and the array light source.

If the first light beam needs to be shaped in both the fast-axis direction and the slow-axis direction, in a possible implementation, the optical shaping assembly includes the first collimator and the second collimator. For details, refer to the foregoing related descriptions. Details are not described herein again. In another possible implementation, the optical shaping assembly includes a two-dimensional focal power shaping element. The two-dimensional focal power shaping element means that focal power in two dimensions (namely, the slow-axis direction and the fast-axis direction) is not 0. The focal power in the two dimensions may be the same or may be different. This is not limited in this application. For design of a value of the focal power of the two-dimensional focal power shaping element in the slow-axis direction, refer to the description of the first collimator. For design of a value of the focal power of the two-dimensional focal power shaping element in the fast-axis direction, refer to the description of the second collimator. Details are not described herein again. If both dimensions have focal power and the focal power is different (that is, both dimensions have curvatures and the curvatures are different), astigmatism may be generated, to correct astigmatism of the array light source.

Specifically, the two-dimensional focal power shaping element is configured to: adjust, in the slow-axis direction, the first divergence angle of the first light beam emitted by the array light source to the first preset divergence angle, and adjust, in the fast-axis direction, the second divergence angle to the second preset divergence angle. Further, the two-dimensional focal power shaping element is further configured to uniformize the first light beam separately in the slow-axis direction and the fast-axis direction, so that the uniformity of the obtained light spot formed by the second light beam in the slow-axis direction is greater than the first preset uniformity, and the uniformity of the obtained light spot in the fast-axis direction is greater than the second preset uniformity.

For example, the two-dimensional focal power shaping element may include a spheric lens (that is, a surface of the lens is spheric) or an aspheric lens. The aspheric lens may include, for example, but is not limited to, a two-dimensional cylindrical lens. It should be noted that, to correct aberration, the optical shaping assembly may be a spheric mirror group (namely, at least two spheric lenses), a two-dimensional cylindrical mirror group (namely, at least two two-dimensional cylindrical mirrors), or the like.

Further, optionally, a location relationship between the array light source and the two-dimensional focal power shaping element is related to a requirement for uniformity. If there is a high requirement for uniformity in the slow-axis direction, the array light source may be disposed at a first preset distance from an object focus of the two-dimensional focal power shaping element in the slow-axis direction. If there is a high requirement for uniformity in the fast-axis direction, the array light source may be disposed at a second preset distance from an object focus of the two-dimensional focal power shaping element in the fast-axis direction. For the first preset distance and the second preset distance, refer to the foregoing related descriptions. Details are not described herein again.

It should be noted that, if the optical shaping assembly includes the two-dimensional focal power shaping element, and the array light source and the two-dimensional focal power element are non-coaxial, the transmitting module may further include a reflective element. The reflective element is located between the array light source and the two-dimensional focal power shaping element, and the reflective element is configured to reflect the first light beam emitted by the array light source to the two-dimensional focal power shaping element.

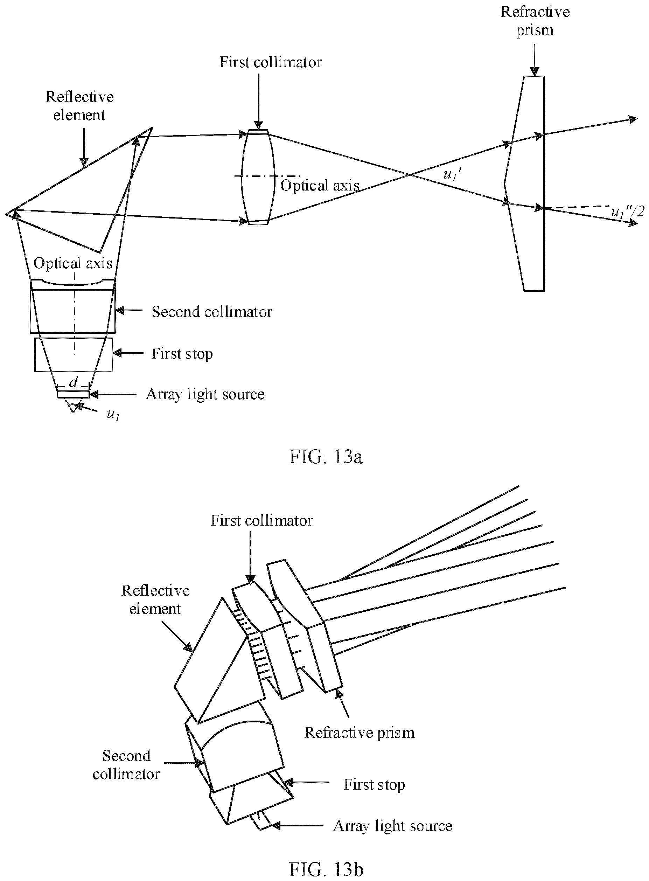

The transmitting module in this application may further include a refractive prism. For details, refer to the following descriptions of FIG. 13a and FIG. 13b. Details are not described herein.

Based on the foregoing content, the following provides two specific implementations of the foregoing transmitting module with reference to a specific hardware structure, to facilitate further understanding of a structure of the foregoing transmitting module. It should be noted that, in the foregoing functional components and structures, unless otherwise stated or there is a logic conflict, another possible transmitting module may be formed by combination based on an internal logical relationship of the functional components and structures.

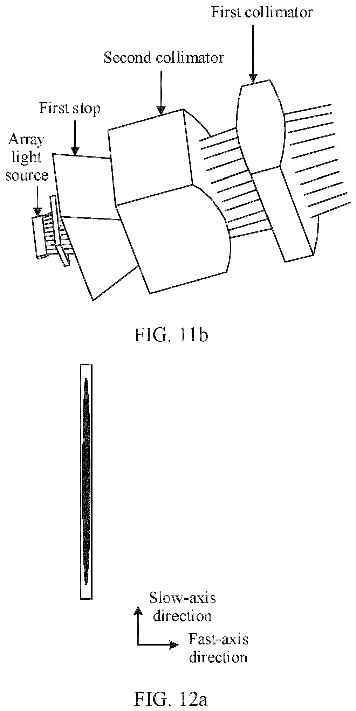

FIG. 11a is a diagram of a structure of still another transmitting module according to this application. FIG. 11b is a diagram of a three-dimensional structure of FIG. 11a. For example, the transmitting module includes an array light source, an optical shaping assembly, and a first stop. For example, the optical shaping assembly includes a first collimator and a second collimator, the array light source includes a column, the first collimator includes a double-convex cylindrical mirror, and the second collimator includes a plano-convex cylindrical mirror. In this example, the array light source and the optical shaping assembly are coaxial. For example, a first divergence angle of a first light beam emitted by the array light source in a slow-axis direction is 13°, and a second divergence angle of a first light beam in a fast-axis direction is 45°. The first collimator shapes the first light beam in the slow-axis direction, and the second collimator shapes the first light beam in the fast-axis direction. The first light beam is shaped by the first collimator and the second collimator to obtain a second light beam. A divergence angle of the second light beam in the slow-axis direction is a first preset divergence angle that is 25°, and a divergence angle of the second light beam in the fast-axis direction is a second preset divergence angle that is 0.1°. For more detailed descriptions of the array light source, the first collimator, the second collimator, and the first stop, refer to the foregoing related descriptions. Details are not described herein again. It should be noted that the structure of the transmitting module provided in FIG. 11a and FIG. 11b is merely an example. The transmitting module may alternatively have fewer structures than those in the foregoing FIG. 11a and FIG. 11b. For example, the transmitting module may not include the first stop in FIG. 11a and FIG. 11b. Certainly, the transmitting module may alternatively have more structures than those in FIG. 11a and FIG. 11b. For example, the transmitting module may further include a second stop. This is not limited in this application.

Energy density distribution, in angular space, of a light spot of the first light beam emitted by the array light source may not meet an actual requirement, and the energy density distribution, in the space, of the light spot of the first light beam may be adjusted by using the optical shaping assembly. In a possible implementation, if the transmitting module is of the structure shown in FIG. 11a and FIG. 11b, energy density distribution, in space, of an obtained light spot formed by the second light beam is uniform, as shown in FIG. 12a. Specifically, uniformity of the light spot formed by the second light beam in the slow-axis direction is greater than first preset uniformity, and uniformity of the light spot formed by the second light beam in the fast-axis direction is greater than second preset uniformity.

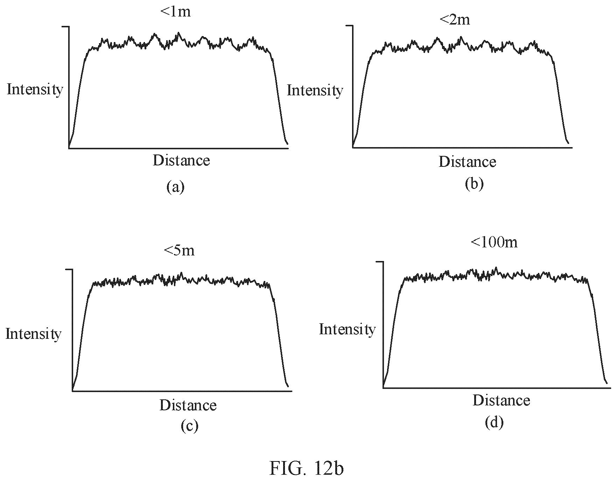

FIG. 12b is a diagram of a simulated relationship between an intensity, in a slow-axis direction, of a light spot formed by a second light beam and an irradiation distance of the second light beam according to this application. It can be learned from FIG. 12b that, as the second light beam is irradiated for a longer distance, the uniformity of the light spot formed by the second light beam is higher. For details, refer to Table 1. Uniformity of 91.76% may be implemented at a distance of 1 m. The uniformity gradually increases with the distance. The uniformity may reach 94.55% at a distance of 100 m.

**Table 1 Simulated relationship between the intensity of the light spot formed by the second light beam and the irradiation distance**

|                | 1m     | 2 m    | 5 m    | 100 m  |
|----------------|--------|--------|--------|--------|
| Maximum value  | 0.065  | 0.02   | 0.01   | 0.0058 |
| Minimum value  | 0.055  | 0.018  | 0.0089 | 0.0052 |
| Uniformity     | 91.76% | 94.14% | 94.44% | 94.55% |

FIG. 13a and FIG. 13b are two diagrams of a structure of a transmitting module according to this application. FIG. 13b is a diagram of a three-dimensional structure of FIG. 13a. For example, the transmitting module includes an array light source, an optical shaping assembly, a first stop, a reflective element, and a refractive prism. In this example, the array light source and the optical shaping assembly are non-coaxial. For example, the optical shaping assembly includes a first collimator and a second collimator, the array light source includes a column of light sources, the first collimator includes a double-convex cylindrical mirror, and the second collimator includes a plano-convex cylindrical mirror. The array light source emits a first light beam. The first light beam is shaped by the second collimator in a fast-axis direction and propagated to the reflective element, reflected by the reflective element to the first collimator, and then shaped by the first collimator in a slow-axis direction, to obtain a second light beam. The refractive prism is configured to adjust a propagation optical path of the second light beam. Specifically, the refractive prism may deflect light of an upper half part of the second light beam downward, deflect light of a lower half part of the second light beam upward, and concentrate energy of the second light beam to a middle region. The middle region is a convex part. After the propagation optical path is adjusted, energy density of the middle region of a light spot formed by the second light beam is greater than energy density of an edge region of a light spot formed by the second light beam. This may also be understood as follows: Energy of the second light beam may be concentrated in a region of interest by using the refractive prism, to improve a distance measuring capability in the region of interest.

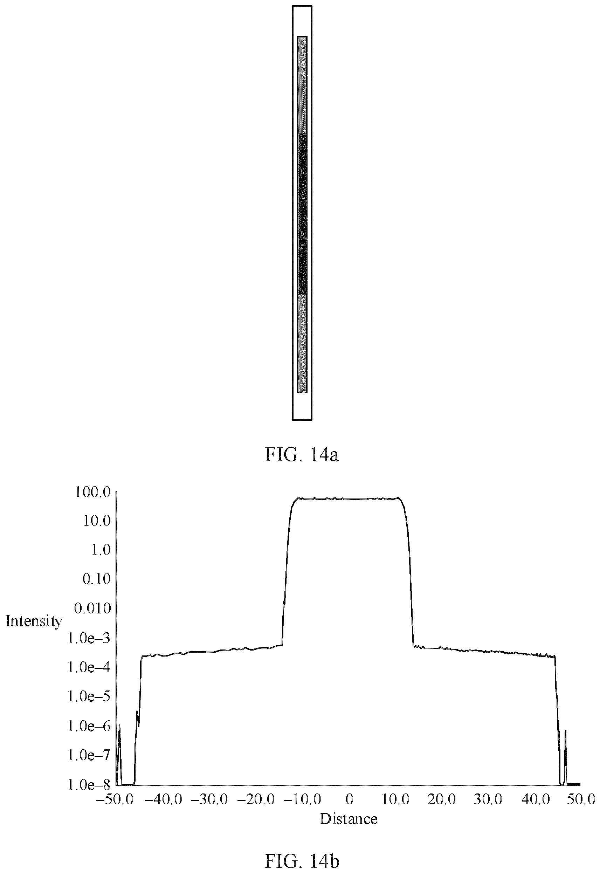

On the basis of this, a shape of the light spot formed by the second light beam after the propagation optical path is adjusted is a " ⌐⊓⌐ " shape or a shape similar to " ⌐⊓⌐ ". With reference to FIG. 14a, the energy density of the convex part of the light spot formed by the second light beam after the propagation optical path is adjusted is higher than energy density of two sides. The energy density of the convex part of the light spot formed by the second light beam after the propagation optical path is adjusted is approximately twice the energy density of the two sides. With reference to a curve of intensity distribution in a slow-axis direction of a simulated far-field light spot in FIG. 14b, it can be learned that energy in the middle is strong, and energy on two sides is weak. This forms a " ⌐⊓⌐ " shape or a shape similar to " ⌐⊓⌐ ". It may be understood that a height and a width of the convex part of the light spot formed by the second light beam after the propagation optical path is adjusted may be implemented by adjusting parameters (such as β or a refractive index) of the first collimator and the refractive prism. A larger β indicates a longer convex part, and a larger refractive index of a material of the refractive prism indicates a longer convex part.

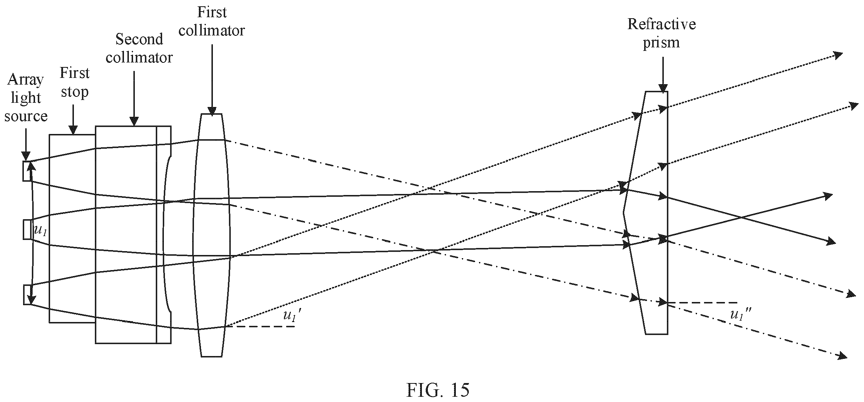

It should be noted that the structure of the transmitting module provided above is merely an example, and the structure of the transmitting module may alternatively be another combination of the functional components and structures provided above, for example, the structure shown in FIG. 15.

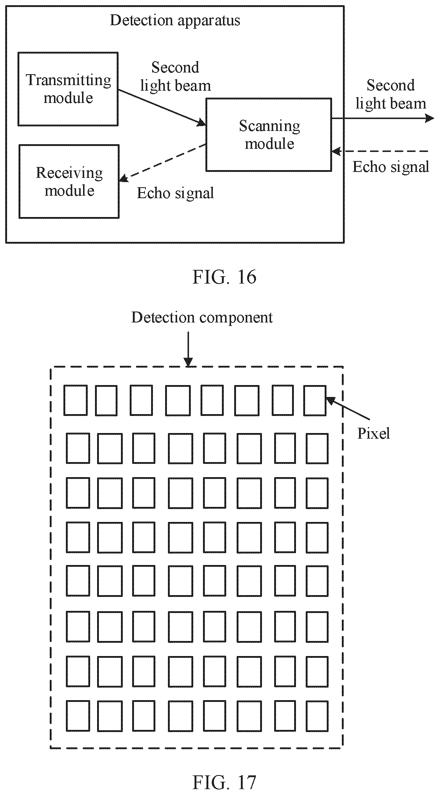

Based on the foregoing described structure and function principle of the transmitting module, this application may further provide a detection apparatus. With reference to FIG. 16, the detection apparatus may include a receiving module and the transmitting module in any one of the foregoing embodiments. The receiving module is configured to receive an echo signal obtained by reflecting a second light beam by a target in a detection region.

In a possible implementation, the receiving module may include a detection component. The detection component is configured to receive the echo signal obtained by reflecting the second light beam by the target in the detection region. Further, optionally, the detection component may perform optical-to-electrical conversion on the echo signal, to obtain an electrical signal used to determine associated information of the target. The associated information of the target may include but is not limited to distance information of the target, an orientation of the target, a speed of the target, grayscale information of the target, and/or the like.

For example, the detection component may be, for example, a photon detector (photon detector, PD), a positive-intrinsic-negative (positive-intrinsic-negative, PIN) photodiode (also referred to as a PIN junction diode), an avalanche photodiode (avalanche photodiode, APD), a single-photon avalanche diode (single-photon avalanche diode, SPAD) array, or a silicon photomultiplier (silicon photomultiplier, SiMP) array.

FIG. 17 is a diagram of a structure of a detection component according to this application. For example, the detection component includes $8\times8$ pixels, and each pixel in the pixel array may include one or more SPADs, SiMPs, or the like. Further, pixels in the pixel array may be selected column by column. It may be understood that the pixel array provided in FIG. 17 is merely an example, and a quantity of rows and a quantity of columns included in the pixel array are not limited in this application. For example, the pixel array may alternatively be a multi-row and one-column pixel array, or may be another multi-row and multi-column pixel array. This is not listed one by one herein. In addition, a shape of the pixel in the pixel array may be another possible shape (for example, a circle, a square, or an ellipse). This is also not limited in this application. It should be noted that, if an array light source is of the structure shown in FIG. 4, the detection component may alternatively include $8\times1$ pixels, or may be the pixel array shown in FIG. 17. If an array light source is of the structure shown in FIG. 5, the detection component may be the pixel array shown in FIG. 17.

In a possible implementation, the receiving module may further include a receiving lens, and the receiving lens may include at least one lens element. The lens element may be, for example, a spheric lens (for example, a concave lens or a convex lens), or may be an aspheric lens. A combination of a plurality of spheric lenses and/or aspheric lenses is used as the receiving lens. This helps improve imaging quality of the detection apparatus and reduce aberration of an optical imaging system. It should be understood that the convex lens and the concave lens have a plurality of different types. For example, the convex lens includes a double-convex lens, a plano-convex lens, and a concavo-convex lens, and the concave lens includes a double-concave lens, a plano-concave lens, and a concavo-convex lens. Types of the convex lens and the concave lens are not limited in this application.

A material of the lens element in the receiving lens may be an optical material, for example, glass, resin, or crystal. When the material of the lens element is resin, mass of the detection apparatus is reduced. When the material of the lens element is glass, the imaging quality of the detection apparatus is further improved. Further, to effectively suppress temperature drift, the receiving lens includes at least one lens element made of the material of glass.

Further, optionally, the detection apparatus may further include a scanning module. The scanning module is configured to reflect a received second light beam to a detection region of the detection apparatus. Specifically, a scanning angle of the scanning module is changed, to change a propagation direction of the second light beam emitted to the detection region. This implements scanning in the detection region. It should be noted that the scanning module may rotate in a continuous running mode, or may rotate in a stepping running mode. This is not limited in this application. During practical application, a specific rotation mode may be preset.

In a possible implementation, the scanning module may be located at a beam waist of the second light beam. The second light beam obtained through pass of a first light beam through a slow-axis collimator presents a convergence trend. Therefore, the beam waist is formed within a short distance. The scanning module is placed at the beam waist of the second light beam. A scanning module with a small reflective surface may be used, to help reduce a volume of the detection apparatus.

For example, the scanning module may be, for example, one of a polyhedron (for example, an octahedron, a hexahedron, or a tetrahedron) rotating mirror, a micro-electromechanical system (micro-electromechanical system, MEMS) mirror, and a swing mirror. It should be noted that a type of the scanning module is not limited in this application, and any structure that can reflect the second light beam to the detection region may be used.

It should be noted that the detection apparatus in this application may further include another possible module, for example, a control module. The control module is configured to determine associated information of a target based on an electrical signal from the detection component, and may further plan a driving path based on the determined associated information of the target, for example, avoiding an obstacle on the path on which a vehicle is to be driven and implementing autonomous driving of a vehicle.

For example, the control module may include, for example, one or more processors. The processor may be a circuit with a signal (or data) processing capability. In an implementation, the processor may be a circuit with an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function via a logical relationship of a hardware circuit. The logical relationship of the hardware circuit is constant or may be reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA) In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). For example, the processor may alternatively be an application processor (application processor, AP), an image signal processor (image signal processor, ISP), another programmable logic device, a transistor logic device, a hardware component, or any combination thereof.

Based on the foregoing described structure and function principle of the detection apparatus, this application may further provide a terminal device. The terminal device may include the detection apparatus in any one of the foregoing embodiments. For example, the terminal device may be, for example, a vehicle (for example, an uncrewed vehicle, a smart vehicle, an electric vehicle, or a digital vehicle), a robot, a surveying and mapping device, an uncrewed aerial vehicle, a smart home device (for example, a television, a robotic vacuum cleaner, a smart desk lamp, an acoustic system, a smart lighting system, an electrical apparatus control system, home background music, a home theater system, an intercom system, or a video surveillance device), a smart production device (for example, an industrial device), a smart transportation device (for example, an AGV, an uncrewed transport vehicle, or a truck), or a smart terminal (for example, a mobile phone, a computer, a tablet computer, a palmtop computer, a desktop computer, a headset, an acoustic device, a wearable device, a vehicle-mounted device, a virtual reality device, or an augmented reality device).

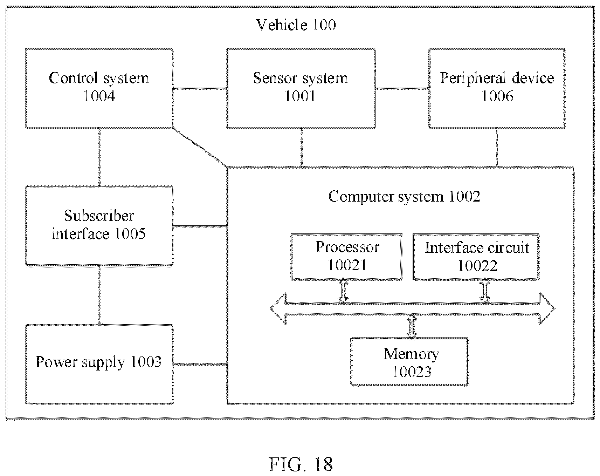

FIG. 18 shows an example in which a terminal device is a vehicle, and is an example of a functional block diagram of the vehicle according to this application. Components coupled to the vehicle 100 or included in the vehicle 100 may include a sensor system 1001 and a computer system 1002. It may be understood that the vehicle function framework shown in FIG. 18 is merely an example. In another example, the vehicle 100 may include more, fewer, or different systems, and each system may include more, fewer, or different components. In addition, the shown systems and components may be combined or split in any manner. This is not specifically limited in this application. For example, the vehicle may further include a power supply 1003, a control system 1004, a subscriber interface 1005, and a peripheral device 1006. The components of the vehicle 100 may be configured to work in a manner of interconnection with each other and/or interconnection with other components coupled to various systems. For example, the power supply 1003 may supply power to all the components of the vehicle 100. The computer system 1002 may be configured to receive data from and control the sensor system 1001, the control system 1004, and the peripheral device 1006.

The sensor system 1001 may include several sensors configured to sense information about an environment in which the vehicle 100 is located, and the like. For example, sensors of the sensor system 1001 may include but are not limited to a global positioning system (Global Positioning System, GPS), an inertia measurement unit (Inertial Measurement Unit, IMU), a millimeter-wave radar, a lidar, a camera, and a brake configured to modify a location and/or an orientation of a sensor. The millimeter-wave radar may sense a target in an ambient environment of the vehicle 100 by using a radio signal. In some embodiments, in addition to sensing the target, the millimeter-wave radar may be further configured to sense a speed and/or a heading direction of the target. The lidar may sense, by using a laser, the target in the environment in which the vehicle 100 is located. In some embodiments, the lidar may be the detection apparatus in any one of the foregoing embodiments. For details, refer to the foregoing descriptions of the detection apparatus. Details are not described herein again. The camera may be configured to capture a plurality of images of the ambient environment of the vehicle 100. The camera may be a still camera or a video camera. In some embodiments, the GPS may be any sensor configured to estimate a geographical location of the vehicle 100. Therefore, the GPS may include a transceiver that estimates the location of the vehicle 100 relative to the earth based on satellite positioning data. In some examples, the computer system 1002 may use the GPS to estimate a road on which the vehicle 100 travels with reference to map data. The IMU may be configured to sense a location and direction change of the vehicle 100 based on inertia acceleration and any combination thereof. In some examples, a combination of sensors in the IMU may include an accelerometer and a gyroscope. In addition, another combination of sensors in the IMU is also possible.

It may be understood that the sensor system 1001 may further include a sensor (for example, an in-vehicle air quality monitor, a fuel gauge, or an engine oil thermometer) of an internal system of the monitored vehicle 100. Sensor data from one or more of these sensors may be used to detect an object and corresponding features (a location, a shape, a direction, a speed, and the like) of the object. Such detection and recognition are key functions for safe operation of the vehicle 100. The sensor system 1001 may further include another sensor. This is not specifically limited in this application.

Some or all the functions of the vehicle 100 are controlled by the computer system 1002. The computer system 1002 may include at least one processor 10021. Further, the computer system 1002 may further include an interface circuit 10022. The processor 10021 executes instructions stored in a non-transient computer-readable medium, for example, a memory 10023. The computer system 1002 may alternatively be a plurality of computing devices that control an individual component or a subsystem of the vehicle 100 in a distributed manner.

The processor 10021 may be a circuit with a signal (or data) processing capability. For a specific possible implementation, refer to the foregoing descriptions of the control module. Details are not described herein again.

Although FIG. 18 functionally illustrates the processor, the memory, and another element of the computer system 1002 in a same block, a person of ordinary skill in the art should understand that the processor or the memory may actually include a plurality of processors or memories that are not stored in a same physical housing. For example, the memory may be a hard disk drive or another storage medium located in a housing different from a housing of the computer system 1002. For another example, the processor may alternatively be far away from the vehicle but may perform wireless communication with the vehicle.

In some embodiments, the memory 10023 may include instructions (for example, program logic), and the instructions may be read by the processor 10021 to perform various functions of the vehicle 100, including the functions described above. The memory 10023 may also include additional instructions, including instructions for sending data to, receiving data from, interacting with, and/or controlling one or more of a propulsion system 110, the sensor system 1001, the control system 1004, and the peripheral device 1006. In addition to the instructions, the memory 10023 may further store data, for example, a road map, route information, data detected by a sensor, a location, a direction, a speed of a vehicle, and other vehicle data, and other information. Such information may be used by the vehicle 100 and the computer system 1002 in autonomous, semi-autonomous, and/or manual modes of the vehicle 100.

The memory may be, for example, a random-access memory (random-access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk drive, a removable hard disk drive, a CD-ROM, or any other form of storage medium well known in the art. For example, a storage medium is coupled to a processor, so that the processor can read information from the storage medium and write information into the storage medium. In another example, the storage medium may alternatively be a component of the processor. The processor and the storage medium may be located in an ASIC. In addition, the ASIC may be located in a detection apparatus. Certainly, the processor and the storage medium may alternatively exist in the detection apparatus as discrete components.

The computer system 1002 may control the functions of the vehicle 100 based on inputs received from various subsystems (for example, the sensor system 1001 and the control system 1004) and from the subscriber interface 1005. For example, the computer system 1002 may use an input from the control system 1004 to control a steering unit to avoid obstacles detected by the sensor system 1001 and an obstacle avoidance system. In some embodiments, the computer system 1002 may operate to provide control on the vehicle 100 and the subsystems of the vehicle 100 in many aspects.

Optionally, one or more of the foregoing components may be installed separately from or associated with the vehicle 100. For example, the memory 10023 may be partially or completely separated from the vehicle 100. The foregoing components may be communicatively coupled together in a wired and/or wireless manner.

For example, the vehicle 100 may be a car, a truck, a motorcycle, a bus, a boat, an airplane, a helicopter, a mower, an entertainment vehicle, a playground vehicle, a construction device, a tram, a golf cart, a train, or a handcart. This is not limited in this application.

In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

In this application, "uniformity" does not mean absolute uniformity, and a specific engineering error may be allowed. "Perpendicularity" does not mean absolute perpendicularity, and a specific engineering error may be allowed. "At least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural. In text descriptions of this application, the character "/" generally indicates an "or" relationship between associated objects. In a formula of this application, the character "/" indicates a "division" relationship between associated objects. In addition, in this application, the term "for example" is used to indicate giving an example, an illustration, or a description. Any embodiment or design scheme described as an "example" in this application should not be explained as being more preferred or having more advantages than another embodiment or design scheme. Alternatively, it may be understood as that the word "example" is used to present a concept in a specific manner, and does not constitute a limitation on this application.

It may be understood that, in this application, various numerals are distinguished merely for ease of description and are not used to limit the scope of embodiments of this application. Sequence numbers of the foregoing processes do not mean an execution sequence, and the execution sequence of the processes should be determined based on functions and internal logic of the processes. The terms "first", "second", and the like are used to distinguish between similar objects without having to describe a specific order or sequence. In addition, the terms "include", "have", and any variant thereof are intended to cover non-exclusive inclusion, for example, include a series of steps or units. For example, a method, system, product, or device is not necessarily limited to those steps or units expressly listed, but may include other steps or units not expressly listed or inherent to such a process, method, product, or device.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A transmitting module, comprising an array light source and an optical shaping assembly, wherein the optical shaping assembly comprises a spheric lens and/or an aspheric lens;

   the array light source is configured to emit a first light beam; and
   the optical shaping assembly is configured to adjust, in at least a first direction, a first divergence angle of the first light beam from the array light source to a first preset divergence angle, and uniformize the first light beam to obtain a second light beam.

2. The module according to claim 1, wherein the array light source comprises $m \times n$ light sources, m is an integer greater than 1, and n is a positive integer.

3. The module according to claim 1 or 2, wherein the optical shaping assembly comprises a first collimator.

4. The module according to claim 3, wherein there is an association relationship among a focal length $f_1$ of the first collimator, a length d of the array light source in the first direction, and the first preset divergence angle $u_1'$.

5. The module according to claim 4, wherein the association relationship satisfies Formula 1:

$$u_1'/2 = \arctan(d/2f_1) \pm \delta_1 \quad \text{Formula 1,}$$

   wherein
   $\delta_1$ is a range of an allowed error in the first direction.

6. The module according to any one of claims 3 to 5, wherein the array light source is located at a first preset distance from an object focus of the first collimator, and the first preset distance is related to a duty cycle of the array light source in the first direction and the first divergence angle of the first light beam.

7. The module according to any one of claims 3 to 6, wherein the first collimator comprises at least one aspheric mirror, and the aspheric mirror comprises a one-dimensional cylindrical mirror.

8. The module according to any one of claims 3 to 7, wherein the transmitting module further comprises a first stop, and the first stop is located between the first collimator and the array light source.

9. The module according to any one of claims 1 to 3, wherein the optical shaping assembly is further configured to:
   adjust, in a second direction, a second divergence angle of the first light beam from the array light source to a second preset divergence angle.

10. The module according to claim 9, wherein the optical shaping assembly is further configured to:
    uniformize, in the second direction, the first light beam from the array light source.

11. The module according to claim 9 or 10, wherein the optical shaping assembly further comprises a second collimator.

12. The module according to claim 11, wherein there is an association relationship among a focal length $f_2$ of the second collimator, a length h of the array light source in the second direction, and the second preset divergence angle $u_2'$.

13. The module according to claim 12, wherein the association relationship satisfies Formula 2:

$$u_2'/2=\arctan(h/2f_2)\pm\delta_2 \text{ Formula 2,}$$

wherein

$\delta_2$ is a range of an allowed error.

14. The module according to any one of claims 11 to 13, wherein the second collimator comprises at least one aspheric mirror, and the aspheric mirror comprises a one-dimensional cylindrical mirror.

15. The module according to any one of claims 11 to 14, wherein the transmitting module further comprises a second stop, and the second stop is located between the second collimator and the array light source.

16. The module according to any one of claims 11 to 15, wherein a focusing line of the first collimator is perpendicular to that of the second collimator.

17. The module according to any one of claims 11 to 16, wherein an optical axis of the first collimator is parallel to or coincides with that of the second collimator.

18. The module according to any one of claims 11 to 16, wherein the transmitting module further comprises a reflective element, and the reflective element is located between the first collimator and the second collimator.

19. The module according to claim 18, wherein the reflective element comprises a reflective prism.

20. The module according to claim 18 or 19, wherein a first optical axis of the first collimator is perpendicular to a second optical axis of the second collimator.

21. The module according to claim 1 or 2, wherein the optical shaping assembly comprises a two-dimensional focal power shaping element; and
the two-dimensional focal power shaping element is configured to: adjust, in the first direction, the first divergence angle of the first light beam from the array light source to the first preset divergence angle, uniformize the first light beam, and adjust, in a second direction, a second divergence angle of the first light beam from the array light source to a second preset divergence angle, to obtain the second light beam.

22. The module according to claim 21, wherein the two-dimensional focal power shaping element comprises any one of the following:

   at least one spheric lens; and
   at least one two-dimensional focal power cylindrical mirror.

23. The module according to any one of claims 1 to 22, wherein the transmitting module further comprises a refractive prism; and
the refractive prism is configured to adjust a propagation optical path of the second light beam, and after the propagation optical path is adjusted, energy density of a middle region of a light spot formed by the second light beam is greater than energy density of an edge region of the light spot formed by the second light beam.

24. The module according to claim 23, wherein a shape of the light spot formed by the second light beam after the propagation optical path is adjusted is " ⊔ " or a shape similar to " ⊔ ".

25. The module according to any one of claims 9 to 24, wherein the first direction is perpendicular to the second direction.

26. The module according to any one of claims 9 to 25, wherein the first direction is a slow-axis direction of the optical shaping assembly; and/or
the second direction is a fast-axis direction of the optical shaping assembly.

27. A detection apparatus, comprising a receiving module and the transmitting module according to any one of claims 1 to 26, wherein
the receiving module is configured to receive an echo signal, and the echo signal is a signal obtained through reflecting a second light beam by a target in a detection region.

**28.** The apparatus according to claim 27, wherein the detection apparatus further comprises a scanning module, and the scanning module is located at a beam waist of the second light beam; and
the scanning module is configured to reflect, to the detection region, the second light beam from an optical shaping assembly.

**29.** A terminal device, comprising a control apparatus and the detection apparatus according to claim 27 or 28.

FIG. 1a

FIG. 1b

Beam waist

u

FIG. 1c

FIG. 2

FIG. 3

FIG. 4

Two-dimensional
array light source

$\Delta_2$

d

Slow-axis
direction
Fast-axis
direction

FIG. 5

FIG. 6

FIG. 7

First collimator

First stop

LD

$u_1'/2$

$u_1$

First light beam

Second light beam

FIG. 8

First collimator

Second collimator

Array light source

$d$

Optical axis

Optical axis

$u_1'$

$u_1$

FIG. 9a

SAC

FAC

Array light
source

FIG. 9b

First collimator

Reflective element

Optical axis

$u_1{}'$

Optical axis

Second collimator

Array
light
source

$d$

$u_1$

FIG. 10a

First collimator

Reflective
element

Second
collimator

Array light
source

FIG. 10b

First collimator

Second collimator

First stop

Array light source

$u_1$

$u_1{'}$

FIG. 11a

First collimator

Second collimator

First stop

Array
light
source

FIG. 11b

Slow-axis
direction

Fast-axis
direction

FIG. 12a

<1m
Intensity
Distance
(a)

<2m
Intensity
Distance
(b)

<5m
Intensity
Distance
(c)

<100m
Intensity
Distance
(d)

FIG. 12b

Refractive
prism

First collimator

Reflective
element

Optical axis

$u_1'$

$u_1'''/2$

Optical axis

Second collimator

First stop

$d$

Array light source

$u_1$

FIG. 13a

First collimator

Reflective
element

Refractive prism

Second
collimator

First stop

Array light source

FIG. 13b

FIG. 14a

FIG. 14b

Array
light
source

First
stop

Second
collimator

First
collimator

Refractive
prism

$u_1$

$u_1'$

$u_1''$

FIG. 15

Detection apparatus

Transmitting module

Second light beam

Scanning module

Second light beam

Receiving module

Echo signal

Echo signal

FIG. 16

Detection component

Pixel

FIG. 17

FIG. 18

<div align="center">

**INTERNATIONAL SEARCH REPORT**

</div>

| | |
|---|---|
| | International application No. |
| | **PCT/CN2022/094966** |

**A.    CLASSIFICATION OF SUBJECT MATTER**

H01S 5/40(2006.01)i；  G02B 27/09(2006.01)i

According to International Patent Classification (IPC) or to both national classification and IPC

**B.    FIELDS SEARCHED**

Minimum documentation searched (classification system followed by classification symbols)

H01S5, G02B27

Documentation searched other than minimum documentation to the extent that such documents are included in the fields searched

Electronic data base consulted during the international search (name of data base and, where practicable, search terms used)

CNTXT; ENTXTC; ENTXT: 匀光, 散角, 准直, 快轴, 阵列, 均匀, 雷达, 行列, 慢轴, 光, collimat+, even, array, fast, slow

**C.    DOCUMENTS CONSIDERED TO BE RELEVANT**

| Category* | Citation of document, with indication, where appropriate, of the relevant passages | Relevant to claim No. |
|---|---|---|
| X | CN 201401667 Y (ZHEJIANG UNIVERSITY) 10 February 2010 (2010-02-10) <br> description, pages 6-8, and figures 1-4 | 1-29 |
| X | CN 110554508 A (NINGBO SUNNY AUTOMOTIVE OPTECH CO., LTD.) 10 December 2019 (2019-12-10) <br> description, paragraphs 76-105, and figures 1-5 | 1-29 |
| X | US 2007053066 A1 (HENTZE LISSOTSCHENKO PATENTVER) 08 March 2007 (2007-03-08) <br> description, paragraphs 26-43, and figures 1-3 | 1-29 |
| X | CN 101834402 A (FOCUSLIGHT TECHNOLOGIES INC.) 15 September 2010 (2010-09-15) <br> description, paragraphs 33-44, and figures 1-4 | 1-29 |
| X | CN 208206801 U (CHENGDU ZIXU ELECTRONIC TECHNOLOGY CO., LTD.) 07 December 2018 (2018-12-07) <br> description, paragraphs 44-67, and figures 1-11 | 1-29 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **25 July 2022** | **01 August 2022** |

| Name and mailing address of the ISA/CN | Authorized officer |
|---|---|
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/094966**

| Patent document cited in search report | | | Publication date (day/month/year) | Patent family member(s) | | | Publication date (day/month/year) |
|---|---|---|---|---|---|---|---|
| CN | 201401667 | Y | 10 February 2010 | None | | | |
| CN | 110554508 | A | 10 December 2019 | None | | | |
| US | 2007053066 | A1 | 08 March 2007 | JP | 2007528509 | A | 11 October 2007 |
| | | | | WO | 2005085935 | A1 | 15 September 2005 |
| | | | | KR | 20070057074 | A | 04 June 2007 |
| CN | 101834402 | A | 15 September 2010 | None | | | |
| CN | 208206801 | U | 07 December 2018 | None | | | |

Form PCT/ISA/210 (patent family annex) (January 2015)